(19) Europäisches Patentamt

European Patent Office

Office européen des brevets

(11) **EP 1 045 555 A2**

(12) **EUROPEAN PATENT APPLICATION**

(43) Date of publication:
**18.10.2000 Bulletin 2000/42**

(51) Int. Cl.⁷: **H04L 12/56**

(21) Application number: **00107382.4**

(22) Date of filing: **05.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.04.1999 US 289797**

(71) Applicant:
**Sun Microsystems, Inc.
Palo Alto, California 94043 (US)**

(72) Inventor: **Hanko, James G.
Redwood City, California 94061 (US)**

(74) Representative:
**Goddar, Heinz J., Dr.
FORRESTER & BOEHMERT
Franz-Joseph-Strasse 38
80801 München (DE)**

(54) **Method and apparatus for management of communications over media of finite bandwidth**

(57) The invention provides a method and apparatus for management of communications over media of finite bandwidth. One embodiment of the invention allows management of communications comprising a plurality of data streams from a plurality of sources. One embodiment of the invention effectively quantifies and controls data streams comprising data transferred at either regular or irregular data rates. One embodiment of the invention provides for estimation of data rate needs, measurement and analysis of current and historical data rate parameters, dynamic allocation of available bandwidth, and supports cooperation between data sources and destinations in the management processes.

FIG. 1

Printed by Xerox (UK) Business Services
2.16.7 (HRS)/3.6

**Description**

BACKGROUND OF THE INVENTION

1. FIELD OF THE INVENTION

The invention relates generally to communication of information and, more particularly, to management of communication of information over media of finite bandwidth.

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all copyright rights whatsoever. Sun, Sun Microsystems, the Sun logo, Java, and all Java-based trademarks and logos are trademarks or registered trademarks of Sun Microsystems, Inc. in the United States and other countries. All SPARC trademarks are used under license and are trademarks of SPARC International, Inc. in the United States and other countries. Products bearing SPARC trademarks are based upon an architecture developed by Sun Microsystems, Inc.

2. BACKGROUND ART

The overall performance of a computing system having components that are physically separated from one another is often limited by the rate at which information may be moved between the components. The communication media for transferring the information between the components has a limit as to the amount of information that can be transferred over it in a given amount of time. This limit is referred to as the bandwidth of the communication media. This limit is, in some sense, analogous to the maximum amount of water that can be pumped through a particular size of pipe in a given amount of time. While water pumped through a pipe may be measured in gallons per minute, for example, the bandwidth of a communication medium is often expressed in bits per second, where each bit is a binary digit. A binary digit is a small unit of information that has either the value zero or the value one and from which other larger units of information may be constructed.

Furthermore, just as a cable television company may combine the signals from many television programs to be carried over one high-capacity cable, it is sometimes desirable to transmit information from multiple sources through a communication medium. In some configurations, multiple sources may transmit information to a single destination, for example, a single user terminal.

However, information passed between components of a computing system is often passed at an irregular rate. For example, much information might be transferred to send a document to a user terminal for display, but little information might be transferred while a user reads the document while it is displayed on the user terminal. Thus, the information may be passed in short bursts of large amounts of information followed by long periods of small amounts of information.

Moreover, each of the multiple sources transmitting information might transmit their respective information irregularly, with large variations between times of high transmission rates and times of low transmission rates. Thus, situations may occur where multiple sources attempt high transmission rates simultaneously. If the instantaneous demand for information transmission exceeds the bandwidth of the communication medium, not all of the information will be able to be passed through the communication medium at the rate it is being fed to the communication medium. Thus, a technique is needed to manage the flow of information through a communication medium and prevent such congestion of the medium from interfering with efficient transfer of information.

Additionally, it is not always the communication medium that is responsible for creating a bottleneck to effective communications. In some instances, it is one or more elements of the computing apparatus linked by the communication media that causes a bottleneck. For example, some commands instructing computing apparatus to perform certain tasks may be very short, but the tasks requested may be very complex and time-consuming. Under such circumstances, the command itself is so short that it will not result in congestion when transmitted over a communication medium, but, by instructing the computing apparatus to perform complex tasks, it may overload the capability of the computing apparatus to process other tasks simultaneously. Thus, a technique is also needed to manage the load placed on the computing apparatus by multiple commands that may come from multiple sources.

One example of a type of computing apparatus that can easily be instructed to perform complex tasks as a result of simple commands is a graphic display, for example, a video monitor or flat panel display. Such displays are comprised of large numbers of small image areas, the color and intensity of which may be individually selectively controlled. These small image areas are referred to as picture elements, or pixels. The display as a whole is a mosaic of pixels used to form characters, symbols, images, or other graphic elements being displayed. However, the process by which the pixels and, consequently, the image being displayed is changed requires time to effect the desired change of pixel colors and intensities. Thus, multiple commands instructing multiple simultaneous changes in an image may overload a graphic display device. Therefore, graphic display device can also be characterized as having a limited bandwidth, with the bandwidth expressed in, for example, pixels per second.

In the past, various attempts were made to accommodate data from multiple sources wherein the cumulative data rate of all such data to be transmitted exceeds the bandwidth of the medium over which the data is to be transmitted. One approach penalizes each of the multiple sources of data to an equal extent. This approach reduces the maximum data rate allocated to each of the sources of data. Thus, the rate at which data is transmitted is reduced for each source. For example, if the cumulative data rate at which the multiple sources would ideally send data is 20 megabits/second (Mbps), but the communication medium is limited to 10 Mbps of bandwidth, the maximum data rate allowed to each source could be cut by 50 percent to prevent overloading the 10 Mbps medium.

While this approach sounds simple and equitable, the effects of reducing the maximum data rate allowed by 50 percent will not affect all sources equally. For example, a source that is allocated, say 4 Mbps of maximum allowable data rate, might normally only transmit data at a rate around 1 Mbps, but occasionally transmit short bursts of data closer to the 4 Mbps rate. If its 4 Mbps allocation is reduced to 2 Mbps, the source will still be allocated twice as much bandwidth as it normally needs, so no adverse effects would be noticed while the data rate remains around 1 Mbps. Only during the bursts of data approaching the 4 Mbps data rate would the data transmission be affected by the 2 Mbps rate limit.

On the other hand, for a source that normally transmits data at a small, but relatively consistent, data rate, a reduction of data rate limit by 50 percent would severely affect the data transmission. Since only half the amount of data could be passed within the same amount of time, a backlog would instantly develop and continue to get worse as long as the lower data rate limit was in place and the consistent data rate attempted by the source was maintained.

Thus, a common reduction of all data rates in response to communication attempts in excess of the capacity of the medium does not fairly and evenly affect all data sources. Data sources exhibiting smaller and more consistent data rates are often affected more severely than data sources that have been allocated large data rate limits or that are more irregular in their data transmission.

Another approach uses a "first-come, first-served" principle, where bandwidth is awarded to the first requester in whatever amount the first requester desires. This approach obviously provides no disincentive for inefficient requests and unfairly penalizes later requesters.

Another scheme that has been used awards more bandwidth to sources exhibiting a high demand for bandwidth. Such an approach may consider the source requesting the most bandwidth to be the most important source and the other sources requesting less bandwidth to be less important sources. Thus, the scheme gives more bandwidth to what it deems to be the most important source, while penalizing what it deems to be the sources of lesser importance.

The problem with such a scheme is that sources attempting to be efficient and use as little bandwidth as possible are penalized more than those that are inefficient and waste the available bandwidth. Moreover, some sources that transmit data at low data rates are actually very important. For example, a keyboard typically generates data only as fast as a user's fingers can depress the keys, which is typically slow by comparison to other processes with which a computer may be involved. However, if the maximum data rate allocated to a keyboard is severely restricted, a user will begin to feel that the computer is out of control since it does not respond rapidly to the user's keystrokes. Thus, such a scheme is also less than ideal.

Another approach involves what is referred to as time division multiplexing (TDM). TDM breaks the data from each source into portions that are discontinuous in time. Then, a first source is allowed to use the entire bandwidth of the communication medium for a small, measured amount of time. When its time is finished, a second source is allowed to use the entire bandwidth of the communication medium for another small, measured amount of time. When all sources have been allowed to use the full capacity of the communication medium for a short period of time, the process is repeated with the first source.

To allocate the bandwidth of the communication medium between the needs of the different sources, the different sources can each be awarded different durations of time, or time slices, within which to operate. Thus, a source that is awarded a 2 millisecond (mS) time slice when the total duration of the time slices of all sources is 10 mS is effectively allocated 20 percent of the available bandwidth of the communication medium.

However, TDM techniques are not without disadvantages. For example, a method is needed to allocate the appropriate time slices to the sources, as well as to ensure that the sources will not transmit data outside of their designated time slices. Moreover, a technique is needed to splice together data transmitted at the end of one time slice and data transmitted at the beginning of the subsequent time slice for the same source. Further, most TDM allocations are performed statically in advance and are difficult to modify dynamically.

Thus, the attempts of the past do not provide an efficient and equitable technique for managing communications over media of finite bandwidth.

SUMMARY OF THE INVENTION

The invention provides a method and apparatus for managing the communication of information. One embodiment of the invention allows management of communications comprising a plurality of data streams from a plurality of sources. One embodiment of the invention effectively quantifies and controls data streams comprising data transferred at either regular or irregular data rates. One embodiment of the invention provides for estimation of data rate needs, measurement and analysis of current and historical data rate parameters, dynamic allocation of available bandwidth, and supports cooperation between data sources and destinations in the management processes.

One embodiment of the invention avoids the inequitable reduction of bandwidth for efficient sources using little bandwidth. One embodiment of the invention avoids rewarding sources that unnecessarily request or use large amounts of bandwidth. One embodiment of the invention equitably and efficiently allocates available bandwidth among sources that provide regular data streams and those that provides irregular data streams. The invention also avoids the complexities associated with time division multiplexing.

In one embodiment of the invention, data sources generate accurate estimates of bandwidth needs. Based on these estimates, the data sources generate requests for bandwidth. The data sources send the requests to the intended receiver of the data. The receiver orders the requests by amount of estimated bandwidth. The receiver allocates available bandwidth in the communication medium based on these requests from the data sources and advises the sources of their allocations.

While the receiver attempts to allocate each data source its full requested bandwidth, the finite bandwidth limit of the communication medium sometimes prevents such allocation. When the total requested bandwidth exceeds the total available bandwidth, the receiver attempts to fully grant the requests of sources that are requesting relatively small amounts of bandwidth, while granting reduced allocations of bandwidth to sources that are requesting relatively large amounts of bandwidth. This may be accomplished by granting the lowest amounts of bandwidth requests while progressing through the ordered list of requests. Once a certain level of bandwidth request is reached, remaining requests on the list will all have higher requests and may be apportioned/allocated similar bandwidths.

Thus, only the sources that require the most bandwidth are affected by the limitation. All other sources are unaffected and are granted the full amount of bandwidth they requested. Moreover, by reducing the allocations for only sources that require large amounts of bandwidth, a large reduction in allocated bandwidth can be achieved by reducing each requested large allocation by only a small percentage. Thus, the average percentage reduction in bandwidth allocations is greatly reduced.

One embodiment of the invention provides a technique for predicting future bandwidth requirements of the sources. The technique utilizes historical information concerning data rates and applies an exponential moving average (EMA) method to predict anticipated future data rates. One embodiment of the EMA method incorporates an asymmetric technique for adapting bandwidth allocations more quickly to increases in data rates than to decreases in data rates. This asymmetric feature avoids the tendency to unduly decrease allocated bandwidth for a source merely because of a temporary lull in the data transmission. The parameters of the EMA method can be selected to provide any desired statistical measurement of data rates, for example, a close approximation of the mean plus one standard deviation on normally distributed streams of data or sets of bandwidth allocations.

BRIEF DESCRIPTION OF THE DRAWINGS

Figure 1 is a block diagram illustrating a system comprising multiple data sources according to one embodiment of the invention.

Figure 2 is a block diagram illustrating a structure of a data source and a data receiver according to one embodiment of the invention.

Figure 3 is a flow diagram illustrating a process performed by a data receiver according to one embodiment of the invention.

Figure 4 is a flow diagram illustrating a process performed by a data source according to one embodiment of the invention.

Figure 5 is a flow diagram illustrating a bandwidth allocation process according to one embodiment of the invention.

Figure 6 is a flow diagram illustrating a process for allocating bandwidth when the cumulative requested bandwidth exceeds the allocatable bandwidth according to one embodiment of the invention.

Figure 7 is a flow diagram illustrating a process for determining and adjusting bandwidth needs according to one embodiment of the invention.

Figure 8 is a flow diagram illustrating a process for asymmetric tracking of data rate information.

Figures 9A, 9B, and 9C are a flow diagram illustrating a process for congestion avoidance according to one embodiment of the invention.

Figure 10 illustrates an example of the congestion avoidance technique according to one embodiment of the invention.

Figure 11 is a drawing of a normal distribution curve illustrating a graphical representation of a statistical value approximating a mean plus one standard deviation.

Figure 12 is a block diagram of one embodiment of a computer system capable of providing a suitable execution environment for an embodiment of the invention.

Figure 13 is a block diagram illustrating a system of computational service producers, an interconnect fabric, and human interface devices according to one embodiment of the invention.

Figure 14 is a block diagram illustrating one possible architecture of a human interface device according to one embodiment of the invention.

DETAILED DESCRIPTION OF THE INVENTION

A method and apparatus for managing communications over media of finite bandwidth is described. In the following description, numerous specific details are set forth in order to provide a more thorough understanding of the present invention. It will be apparent, however, to one skilled in the art, that the present invention may be practiced without these specific details. In other instances, well-known features have not been described in detail in order not to unnecessarily obscure the present invention.

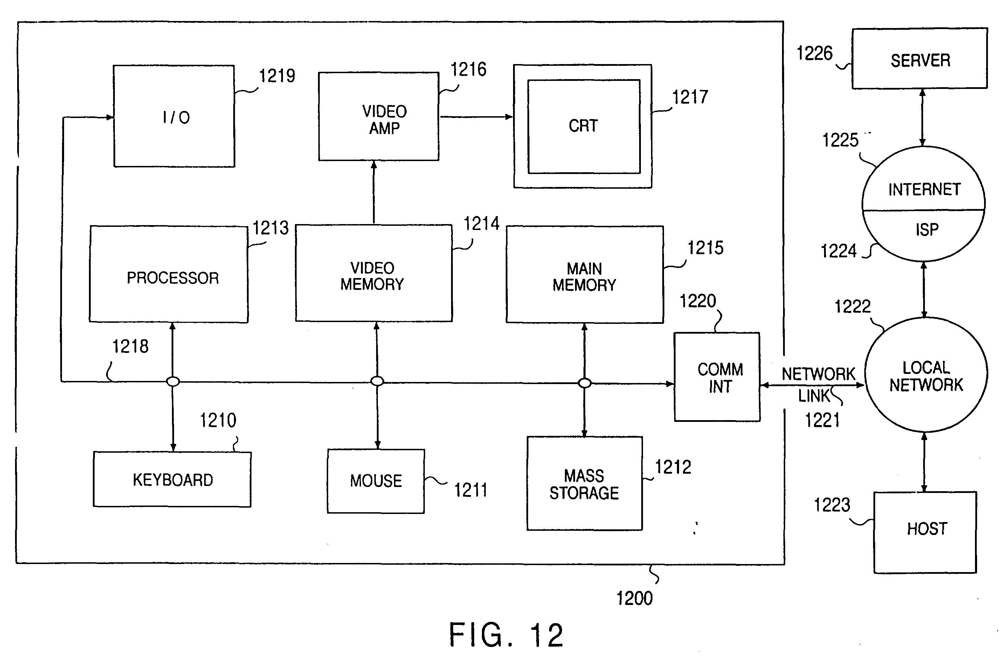

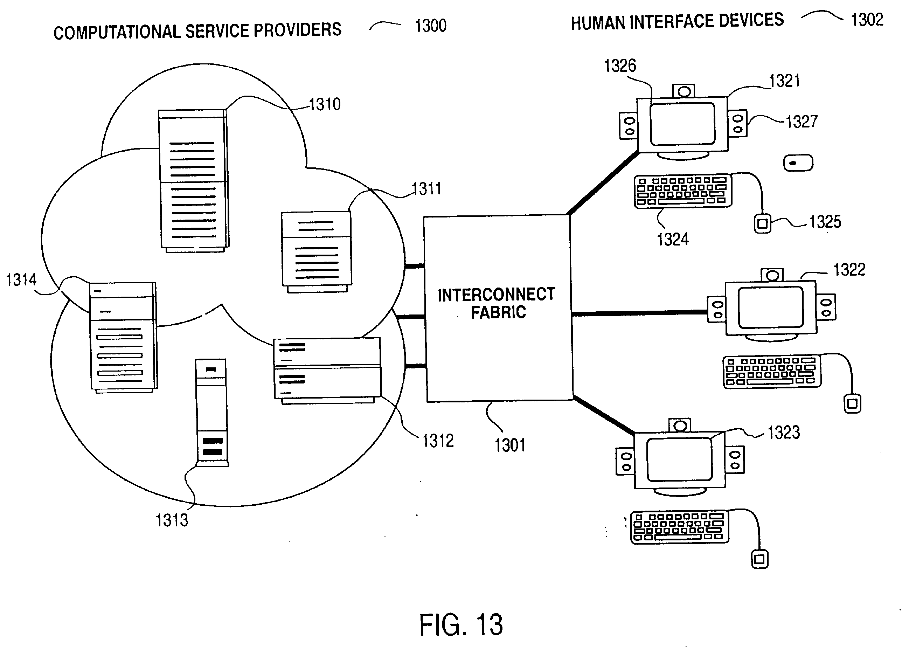

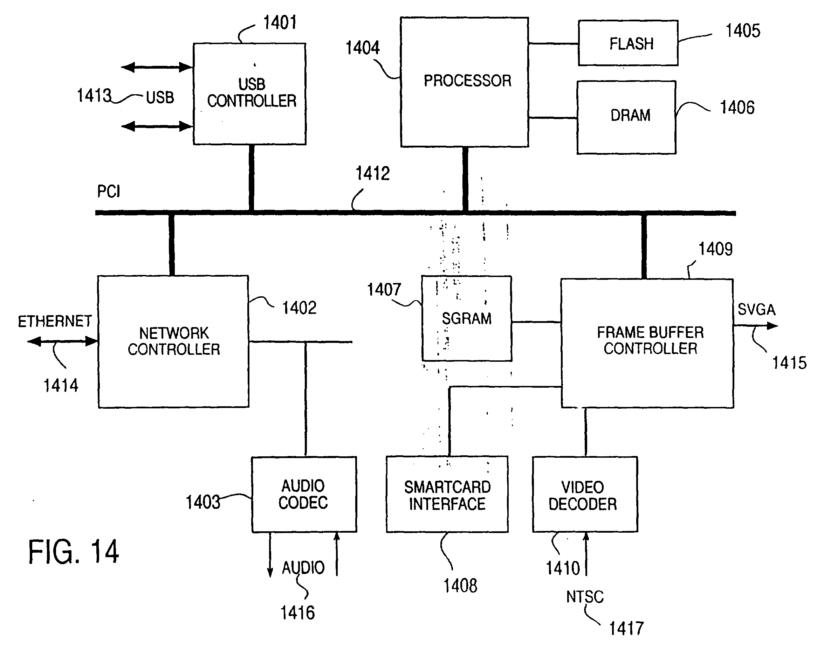

Figures 12, 13, and 14 provide examples of system architectures used in one or more embodiments of the invention. The present invention can be implemented in standard desktop computer systems such as described in Figure 12, or in any other computer systems, including client - server systems, network computers, or the human interface device system of Figures 13 and 14.

Embodiment of Computer Execution Environment (Hardware)

An embodiment of the invention can be implemented as computer software in the form of computer readable code executed on a general purpose computer such as computer 1200 illustrated in Figure 12, or in the form of bytecode class files executable within a Java™ runtime environment running on such a computer, or in the form of bytecodes running on a processor (or devices enabled to process bytecodes) existing in a distributed environment (e.g., one or more processors on a network). A keyboard 1210 and mouse 1211 are coupled to a system bus 1218. The keyboard and mouse are for introducing user input to the computer system and communicating that user input to processor 1213. Other suitable input devices may be used in addition to, or in place of, the mouse 1211 and keyboard 1210. I/O (input/output) unit 1219 coupled to system bus 1218 represents such I/O elements as a printer, A/V (audio/video) I/O, etc.

Computer 1200 includes a video memory 1214, main memory 1215 and mass storage 1212, are coupled to system bus 1218 along with keyboard 1210, mouse 1211 and processor 1213. The mass storage 1212 may include both fixed and removable media, such as magnetic, optical or magnetic optical storage systems or any other available mass storage technology. Bus 1218 may contain, for example, thirty-two address lines for addressing video memory 1214 or main memory 1215. The system bus 1218 also includes, for example, a 64-bit data bus for transferring data between and among the components, such as processor 1213, main memory 1215, video memory 1214 and mass storage 1212. Alternatively, multiplex data/address lines may be used instead of separate data and address lines.

In one embodiment of the invention, the processor 1213 is a microprocessor manufactured by Sun Microsystems, Inc., such as the SPARC™ microprocessor, or a microprocessor manufactured by Motorola, such as the 680X0 processor, or a microprocessor manufactured by Intel, such as the 80X86, or Pentium processor. However, any other suitable microprocessor or microcomputer may be utilized. Main memory 1215 is comprised of dynamic random access memory (DRAM). Video memory 1214 is a dual-ported video random access memory. One port of the video memory 1214 is coupled to video amplifier 1216. The video amplifier 1216 is used to drive the cathode ray tube (CRT) raster monitor 1217. Video amplifier 1216 is well known in the art and may be implemented by any suitable apparatus. This circuitry converts pixel data stored in video memory 1214 to a raster signal suitable for use by monitor 1217. Monitor 1217 is a type of monitor suitable for displaying graphic images.

Computer 1200 may also include a communication interface 1220 coupled to bus 1218. Communication interface 1220 provides a two-way data communication coupling via a network link 1221 to a local network 1222. For example, if communication interface 1220 is an integrated services digital network (ISDN) card or a modem, communication interface 1220 provides a data communication connection to the corresponding type of telephone line, which comprises part of network link 1221. If communication interface 1220 is a local area network (LAN) card, communication interface 1220 provides a data communication connection via network link 1221 to a compatible LAN. Wireless links are also possible. In any such implementation, communication interface 1220 sends and receives electrical, electromagnetic or optical signals which carry digital data streams representing various types of information.

Network link 1221 typically provides data communication through one or more networks to other data devices. For example, network link 1221 may provide a connection through local network 1222 to local server computer 1223 or to data equipment operated by an Internet Service Provider (ISP) 1224. ISP 1224 in turn provides data communication services through the world wide packet data communication network now commonly referred to as the "Internet" 1225. Local network 1222 and Internet 1225 both use electrical, electromagnetic or optical signals which carry digital data streams. The signals through the various networks and the signals on network link 1221 and through communication interface 1220, which carry the digital data to and from computer 1200, are exemplary forms of carrier waves transporting the information.

Computer 1200 can send messages and receive data, including program code, through the network(s), network link 1221, and communication interface 1220. In the Internet example, remote server computer 1226 might transmit a requested code for an application program through Internet 1225, ISP 1224, local network 1222 and communication interface 1220.

The received code may be executed by processor 1213 as it is received, and/or stored in mass storage 1212, or other non-volatile storage for later execution. In this manner, computer 1200 may obtain application code in the form of a carrier wave.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Human Interface Device Computer System

The invention also has application to a computer systems where the data to be displayed is provided through a network. The network can be a local area network, a wide area network, the internet, world wide web, or any other suitable network configuration. One embodiment of the invention is used in computer system configuration referred to herein as a human interface device computer system.

In this system the functionality of the system is partitioned between a display and input device, and data sources or services. The display and input device is a human interface device (HID). The partitioning of this system is such that state and computation functions have been removed from the HID and reside on data sources or services. In one embodiment of the invention, one or more services communicate with one or more HIDs through some interconnect fabric, such as a network. An example of such a system is illustrated in Figure 13. Referring to Figure 13, the system consists of computational service providers 1300 communicating data through interconnect fabric 1301 to HIDs 1302.

Computational Service Providers - In the HID system, the computational power and state maintenance is found in the service providers, or services. The services are not tied to a specific computer, but may be distributed over one or more traditional desktop systems such as described in connection with Figure 12, or with traditional servers. One computer may have one or more services, or a service may be implemented by one or more computers. The service provides computation, state, and data to the HIDs and the service is under the control of a common authority or manager. In Figure 13, the services are found on computers 1310, 1311, 1312, 1313, and 1314.

Examples of services include Java™ program execution service, X11/Unix services, archived video services, Windows NT service, and others. A service herein is a process that provides output data and responds to user requests and input.

<u>Interconnection Fabric</u> - In the invention, the interconnection fabric is any of multiple suitable communication paths for carrying data between the services and the HIDs. In one embodiment the interconnect fabric is a local area network implemented as an ethernet network. Any other local network may also be utilized. The invention also contemplates the use of wide area networks, the internet, the world wide web, and others. The interconnect fabric may be implemented with a physical medium such as a wire or fiber optic cable, or it may be implemented in a wireless environment.

<u>HIDs</u> - The HID is the means by which users access the computational services provided by the services, and as such the HID may also be referred to as a client or user workstation or terminal. Figure 13 illustrates HIDs 1321, 1322, and 1323. A HID consists of a display 1326, an optional keyboard 1324, an optional mouse or pointing device 1325, and audio speakers 1327. The HID includes the electronics need to interface these devices to the interconnection fabric and to transmit to and receive data from the services.

A block diagram of the HID is illustrated in Figure 14. The components of the HID are coupled internally to a PCI bus 1412. A network control block 1402 communicates to the interconnect fabric, such as an ethernet, through line 1414. An audio codec 1403 receives audio data on interface 1416 and is coupled to block 1402. USB data communication is provided on lines 1413 to USB controller 1401.

An embedded processor 1404 may be, for example, a Sparc2ep with coupled flash memory 1405 and DRAM 1406. The USB controller 1401, network controller 1402 and embedded processor 1404 are all coupled to the PCI bus 1412. Also coupled to the PCI 1412 is the video controller 1409. The video controller 1409 may be for example, and ATI Rage128 frame buffer controller (or any other suitable controller) that provides SVGA output on line 1415. NTSC or PAL data is provided into the video controller through video decoder 1410. A smartcard interface 1408 may also be coupled to the video controller 1409.

Alternatively, the HID can be implemented using a single chip solution including the necessary processing capability.

This architecture or system is described in greater detail in U.S. Patent Application Serial No. 09/063,335, assigned to the present assignee, filed April 20, 1998, entitled "Method and Apparatus for Providing a Virtual Desktop System Architecture" which is hereby fully incorporated by reference.

The computer systems described above are for purposes of example only. An embodiment of the invention may be implemented in any type of computer system or programming or processing environment.

When the cumulative data rate of multiple data sources transmitting data over a medium exceeds the bandwidth of the medium, the medium is incapable of transmitting all of the data at the desired data rates. To maintain the data transmission within the bandwidth limit of the medium, some of the data must be delayed or not sent at all. However, when multiple sources are transmitting varying amounts of data at varying times, the selection of which data is to be delayed or dropped becomes quite complex. Inappropriate selection of data to be delayed or dropped can result in severe reductions in system performance. Thus, a technique is needed to manage the communication of data from multiple sources over a medium of finite bandwidth, where the cumulative bandwidth needs of the multiple sources may exceed the bandwidth of the medium.

In one embodiment of the invention, multiple data sources are coupled to a data receiver through a communication medium. The data sources may be any source of information, and the information may be of any type or of multiple types. For example, the information may be computer program code, text, audio data, video data, graphical data, data representative of conditions or events, digital information, analog information, or any other information in any other form. Examples of data sources include computer equipment, audio devices, video devices, user input devices, information storage devices, network equipment, sensors, identification devices, or any other sources of information.

When information is to be sent from a data source to a data receiver, the data source predicts the amount of bandwidth that will be needed to transfer the information at an acceptable data rate. The data source sends an estimate of its bandwidth needs to the data receiver. In an environment with multiple data sources, the data receiver receives estimates of bandwidth needs from multiple data sources. The data receiver adds the estimates of bandwidth needs of the multiple data sources to obtain the cumulative data rate requested by the multiple data sources. The data receiver compares the cumulative data rate requested to the bandwidth of the communication medium over which the information is to pass. If the cumulative data rate requested is less than the bandwidth of the medium, the data receiver does not limit the data rate of any of the multiple data sources. The data receiver allocates to each data source the full amount of bandwidth requested by that data source. Excess available bandwidth may be reserved, distributed equally to all sources, or distributed proportionately based on the bandwidth estimates.

However, if the cumulative data rate requested exceeds the bandwidth of the communication medium, the data receiver sorts the amounts of bandwidth requested by each data source in order of estimated bandwidth required. For the data sources requesting relatively low amounts of bandwidth, the data receiver allocates all of the requested bandwidth. For the data sources requesting relatively high amounts of bandwidth, the data receiver allocates only a portion of the bandwidth requested. The data receiver balances the benefits of only slightly reducing the requested bandwidth with the benefits of not reducing the requested bandwidth at all to determine the number of data sources affected by the reduction and the extent of bandwidth reduction for each affected data source.

In one embodiment of the invention, data sources produce estimates of the bandwidth they will likely require by monitoring commands being sent to the data receiver. For example, a data source comprising an X window server monitors commands sent to an X window client program. By monitoring such commands, the X window server can determine the number of bits and the number of pixels to be transmitted and an ideal period of time over which such transmission should occur. By dividing the number of bits by the ideal period of time, the X window server can obtain an ideal data rate expressed in bits per second for the data generated by the commands. Likewise, by dividing the number of pixels by the ideal period of time, the X window server can obtain an ideal data rate expressed in pixels per second for the data generated by the commands. These ideal data rates can be used as initial estimates of bandwidth needs.

As this monitoring and estimation process continues, the historical information concerning the data rates can be used to produce statistical parameters descriptive of the data rates. For example, the average data rate or a data rate equal to the average data rate plus one standard deviation can be accurately approximated and used to determine future bandwidth allocations.

The data sources can perform such monitoring, analysis, and estimation of data rate parameters during periods when they are not transmitting data or, if sufficient computing resources exist at the data sources, during periods when they are transmitting data. For example, if a reduction of allocated bandwidth slows the rate at which a data source can transmit data, the data source may be able to use the time while it waits to transmit the data to perform the monitoring, analysis, and estimation of data rate parameters.

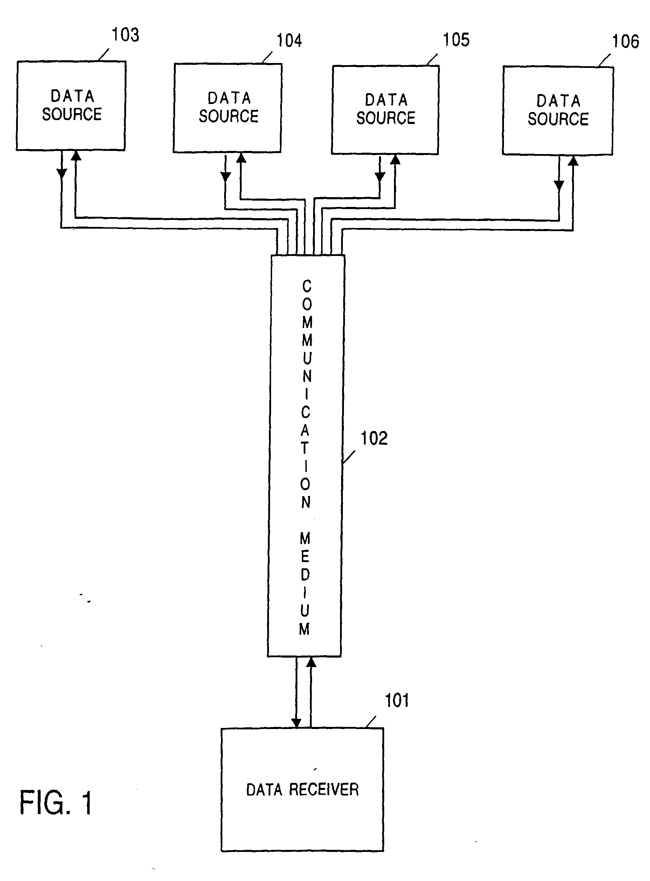

Figure 1 is a block diagram illustrating a system comprising multiple data sources according to one embodiment of the invention. The system comprises data receiver 101, communication medium 102, and data source 103, 104, 105, and 106. Data receiver 101 is coupled to data sources 103-106 via communication medium 102, which is capable of passing information at a finite data rate. Each of data sources 103-106 transmits data to data receiver 101 through communication medium 102. Data sources 103-106 may transmit data regularly or irregularly at constant or varying data rates. Data receiver 101 is capable of passing information back to any of data sources 103-106.

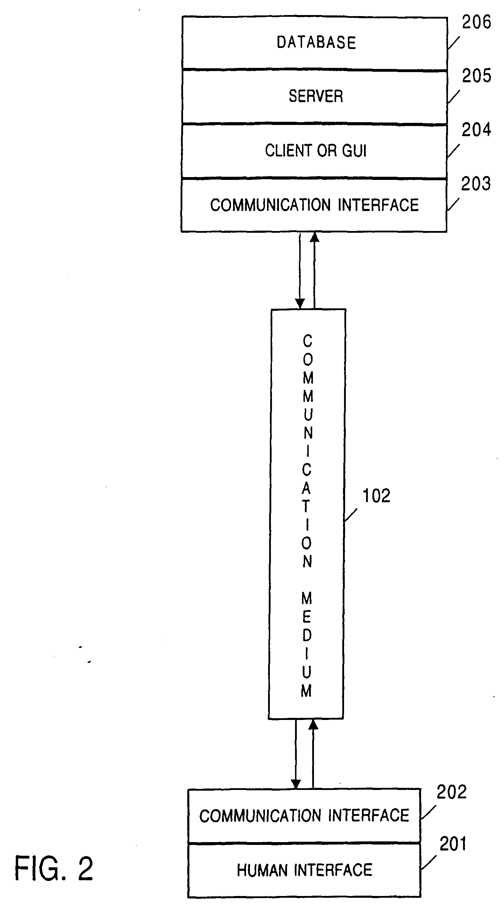

Figure 2 is a block diagram illustrating a structure of a data source and a data receiver according to one embodiment of the invention. The data source comprises human interface 201 and communication interface 202. Human interface 201 may be any type of apparatus for interaction with a human, for example, a keyboard, a display, a mouse or other pointing device, speakers or headphones, a microphone, any other human interface apparatus, or a combination thereof. Human interface 201 may also include other input/output devices, for example, a printer, scanner, card reader, biometric or other sensor, some other input/output device, or a combination thereof.

Human interface 201 is coupled to communication interface 202. Communication interface 202 allows communication between human interface 201 and communication medium 102. Communication interface 201 supports a bandwidth limitation capability according to one embodiment of the invention.

The data source may comprise a communication interface 203, and, optionally, a database 206, a server 205, and a client or graphic user interface (GUI) 204. Database 206 stores data. Server 205 allows access to database 206 for storage and retrieval of data therein. Client or GUI 204 utilizes server 204 to store and retrieve data from database 206. Client or GUI 204 presents data from database 206 is a textual or graphic form for presentation through human interface 201.

Client or GUI 204 is coupled to communication interface 203. Communication interface 203 allows communication between client or GUI 204 and communication medium 102. Communication interface 203 supports a bandwidth limitation capability according to one embodiment of the invention.

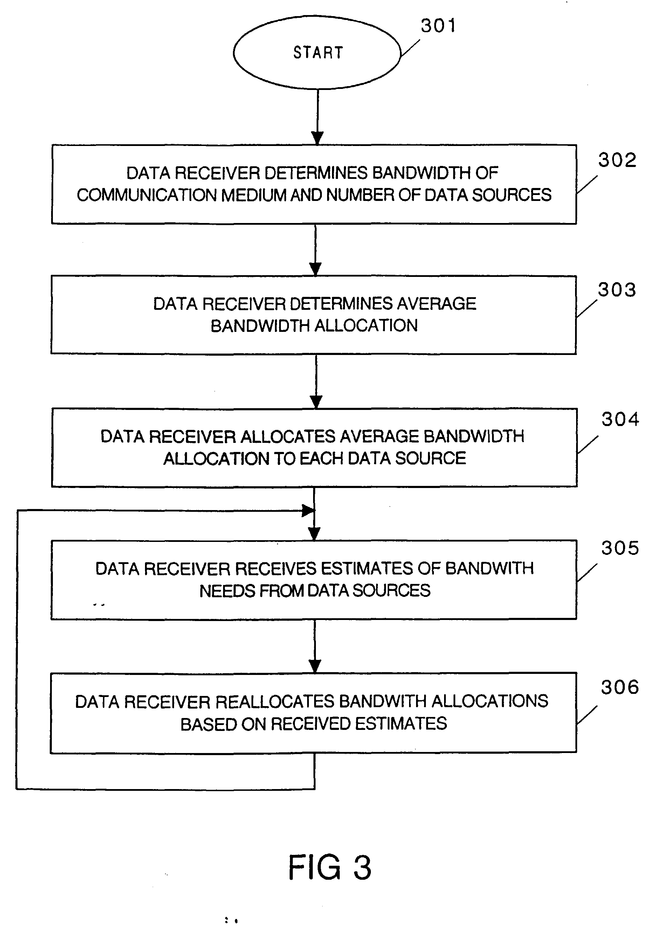

Figure 3 is a flow diagram illustrating a process performed by a data receiver according to one embodiment of the invention. The process begins in step 301. In step 302, the data receiver determines the bandwidth of the communication medium and the number of data sources that will be transmitting data. In step 303, the data receiver determines the average bandwidth allocation for each data source by dividing the bandwidth of the communication medium by the number of data sources. In step 304, the data receiver allocates the average bandwidth allocation determined in step 303 to each data source. The data receiver informs each data source of its bandwidth allocation.

In step 305, the data receiver receives estimates of bandwidth needs from the data sources. In step 306, the data receiver reallocates bandwidth allocations based on the estimates received from the data sources. The data receiver informs each data source of its newly determined bandwidth allocation. From step 306, the process returns to step 305.

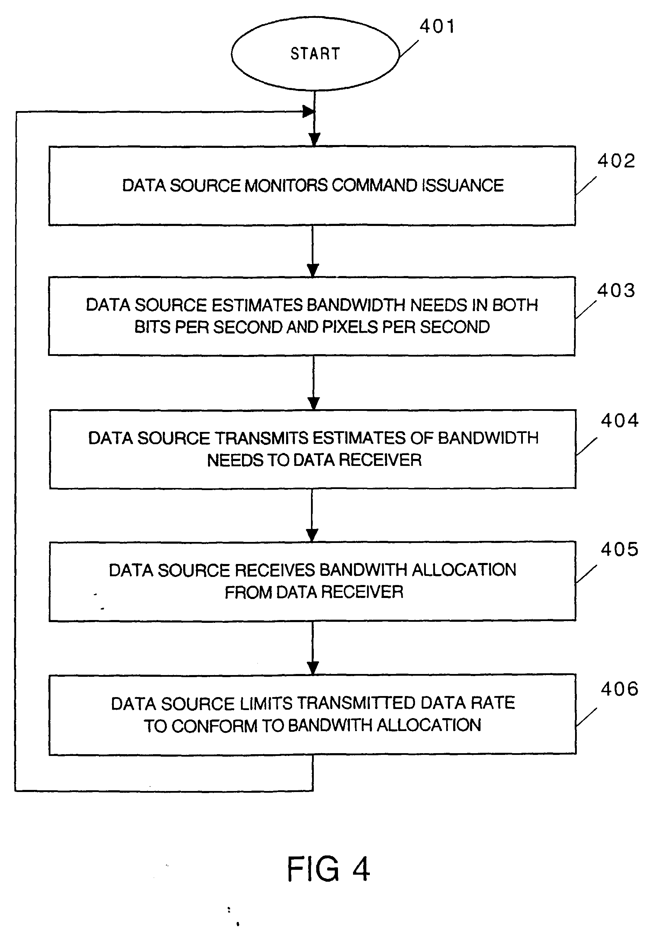

Figure 4 is a flow diagram illustrating a process performed by a data source according to one embodiment of the invention. The process begins in step 401. In step 402, the data source monitors command issuance. For example, the data source can monitor commands issued by a server to a client or vice versa.

In step 403, the data source estimates bandwidth needs in bits per second and/or pixels per second. These estimates are derived from the monitoring of command issuance. The data source calculates the number of bits or pixels that will be generated by a command and the period of time over which they will be generated. By dividing the number of bits or pixels by the period of time, a bits per second or pixels per second value is generated. The data source statistically combines these values with historical data for these values to produce statistical values. One example of these statistical values is a set of values representative of the mean plus one standard deviation of the bits per second and pixels per second values. These statistical values are used to produce an estimate of bandwidth needs in both bits per second and pixels per second.

In step 404, the data source transmits the estimates of bandwidth needs to a data receiver. In step 405, the data source receives a bandwidth allocation from the data receiver. In step 406, the data source limits its transmitted data rate to conform to the bandwidth allocation.

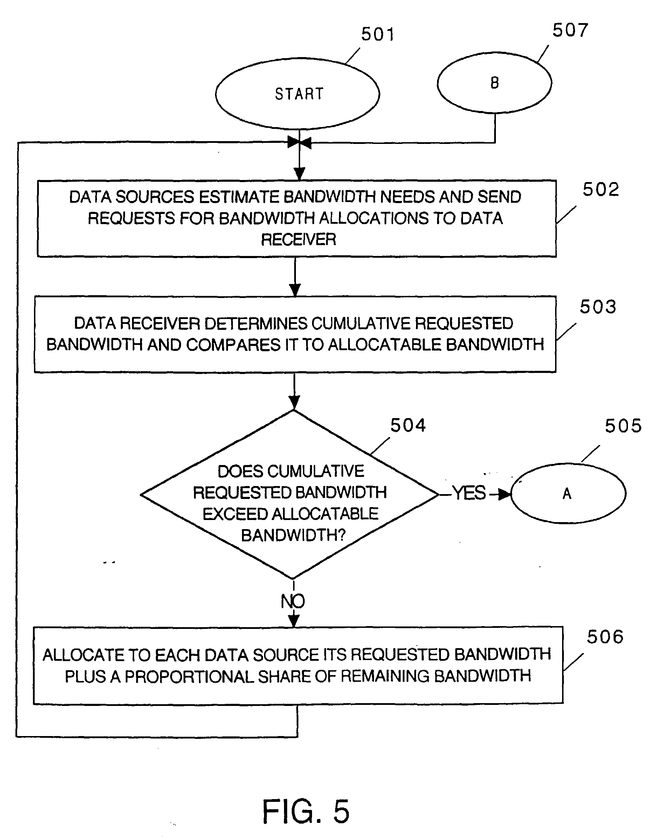

Figure 5 is a flow diagram illustrating a bandwidth allocation process according to one embodiment of the invention. The process begins in step 501. In step 502, the data sources estimate bandwidth needs and send requests for bandwidth allocations to a data receiver. In step 503, the data receiver determines the cumulative requested bandwidth and compares it to the allocatable bandwidth. The allocatable bandwidth includes bandwidth of a communication medium that can be allocated for the communication of transmission. For example, the allocatable bandwidth may or may not include additional bandwidth used to facilitate communication, such as packet addressing information, a preamble, or other overhead.

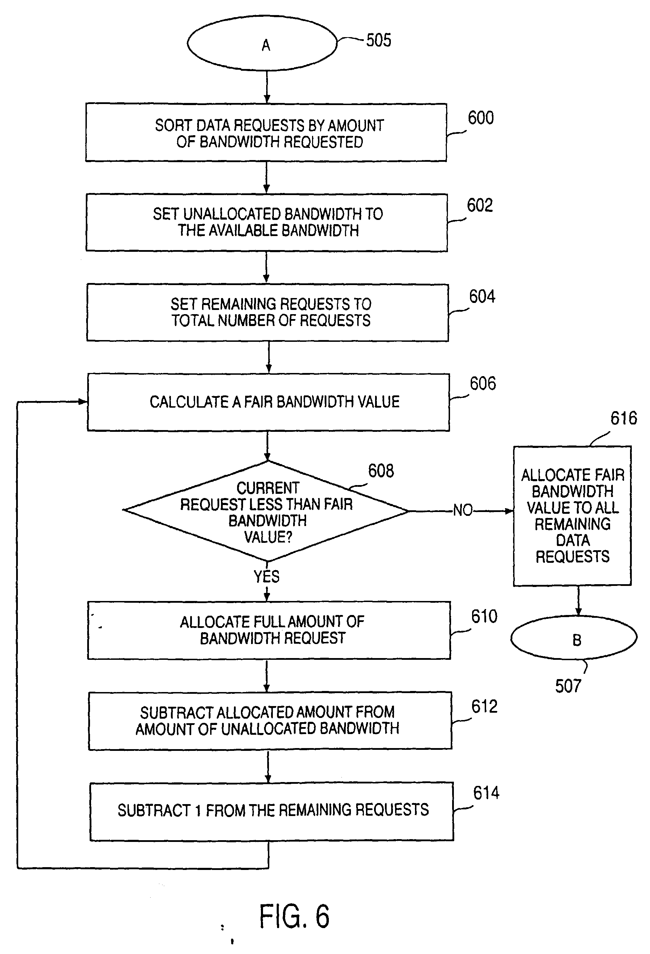

In step 504, a decision is made as to whether or not the cumulative requested bandwidth exceeds the allocatable bandwidth. If it does, the process continues at reference 505, which corresponds to references 505 of Figure 6. If it does not, the process continues at step 506. In step 506, the amount of bandwidth requested by a data source plus a proportional share of remaining bandwidth is allocated to each data source. From step 506, the process returns to step 502.

Figure 6 is a flow diagram illustrating a process for allocating bandwidth when the cumulative requested bandwidth exceeds the allocatable bandwidth according to one embodiment of the invention. The process continues from the process of Figure 5 at reference 505. From reference 505, the process continues at step 600. In step 600, the data source requests are sorted by the amount of bandwidth each source has requested. At step 602, the unallocated bandwidth is set to the value of available bandwidth. At step 604, the number of remaining requests is set equal to the total number of requests. Steps 602 and 604 establish preliminary values for the amount of unallocated bandwidth and number of requests for use in subsequent calculations. At step 606 a fair bandwidth value is calculated. For example the fair bandwidth value may be equal to the amount of unallocated bandwidth divided by the number of remaining requests. Using such a calculation provides an average or fair bandwidth value that may be distributed to all remaining requests. Step 608 begins by determining whether the lowest requested bandwidth (or current bandwidth in the ordered list) is less than the fair bandwidth value. If not, then based on the ordering of the requests, it may be assured that all remaining requests are greater than the fair or average bandwidth value. Consequently, all remaining requests are allocated the fair bandwidth value at step 616. From step 616, the process returns to step 502 of Figure 5 via reference 507.

If it is determined at step 608 that the request is less than the fair bandwidth value, the full amount of the request is allocated at step 610. At step 612, the amount allocated is subtracted from the amount of unallocated bandwidth. At step 614, the number of remaining requests is subtracted by one (1), and processing continues at step 606. Using such an approach, each request is examined once until the request is greater than the fair bandwidth value. Thus, the bandwidth is partitioned such that those services that are taking less than a "fair share" get all of the bandwidth needed, and others receive a "fair share".

One or more embodiments may modify the above steps. For example, in one or more embodiments, step 608 may be repeated for each request in the ordered list as long as the value is less than the fair bandwidth value. Once the value is higher than the fair bandwidth value, all previous requests may be allocated the full amount at step 610, all allocated amounts are subtracted from the amount of available bandwidth at step 612, and the number of requests that received allocations is subtracted from the number of remaining requests. Using such an approach, multiple requests may be satisfied without recalculating a fair bandwidth value at step 606.

An example to illustrate the first above process is given below. If a communication medium providing a bandwidth of 100 Mbps is available, and 12 data sources are attempting to transmit 32, 1, 2, 16, 4, 8, 48, 1, 12, 20, 4, and 10 Mbps, respectively, for a total of 158 Mbps of requested bandwidth, it is clear that the requested bandwidth exceeds the available bandwidth by 58 percent.

First, the requests are sorted by the amount of requested bandwidth (e.g., 1, 1, 2, 4, 4, 8, 10, 12, 16, 20, 32, 48). The amount of unallocated bandwidth is set to the amount of available bandwidth (e.g., 100 Mbps). The number of remaining requests is set to the total number of requests (e.g., 12). A fair bandwidth value is determined by dividing the 100 Mbps available bandwidth by the 12 data sources, resulting in an fair value of 8.33 Mbps per data source.

The first request (e.g., 1 Mbps) is examined to determine if it is less than 8.33 Mbps. Since it is less than 8.33 Mbps, it receives its full allocation. The amount allocated (e.g., 1 Mbps) is subtracted from the total (100 Mbps) to leave 99 Mbps in bandwidth available for allocation and 1 is subtracted from the remaining requests to leave 11 requests. A new fair value is calculated (e.g., 99 Mbps/11 = 9 Mbps). Since 1 Mbps is still less than 9 Mbps, the second request of 1 Mbps is allocated the full amount. The process repeats until the value of the request is greater than the fair bandwidth value. When the request with a value of 16 Mbps is reached, the fair bandwidth value is 14.5 Mbps (58 Mbps total bandwidth left / 4 requests left). Since there are no data sources requesting more than 12 Mbps but less than 14.50 Mbps (as assumed due to the ordering of the requests), all remaining data sources requesting more than 14.50 Mbps are allocated 14.50 Mbps regardless of the actual amount of bandwidth requested by these data sources. Thus, the total amount of bandwidth allocated to the 12 data sources is 1 + 1 + 2 + 4 + 4 + 8 + 10 + 12 + 14.5 + 14.5 + 14.5 + 14.5 = 100 Mbps. Therefore, all bandwidth of the communication medium available for allocation has been allocated, but the total bandwidth of the communication medium has not been exceeded.

One embodiment of the invention allows the application of weightings to the bandwidth estimates of the data sources. Such weightings can be used to modify the bandwidth allocation that would otherwise occur without such weightings. For example, if a user perceives what is deemed to be a particularly important data source to be transmitting data at an unacceptably low data rate because of a low bandwidth allocation, the user can increase the weighting of that data source relative to the other data sources in the bandwidth allocation process. This will result in some amount of allocatable bandwidth being redistributed from the other processes to the one having the higher weighting, thereby increasing the data rate at which the more highly weighted process can transmit data.

Likewise, a particular data source deemed to be less important can be given a lower weighting to sacrifice some of its allocated bandwidth for the benefit of other more important data sources. Individual weightings can be applied to each data source, or a default weighting can be given to all data sources with specific weightings applied to particular data sources as desired. The weightings may be applied as factors multiplied by the estimates of bandwidth needs for each data source.

One embodiment of the invention provides for dynamic reallocation of available bandwidth. One manner in which dynamic reallocation is provided is that adjustments to allocations previously made to data sources can be made, thereby updating the previous allocations and effectively reallocating the available bandwidth of the communication medium.

Another aspect of the dynamic reallocation of available bandwidth is that bandwidth allocations may be defined to be valid only for a period of time. For example, allocations may be valid only for a period of time ranging from 1 mS to 10 seconds, such as a period of 100 mS. A data source receives a new allocation to allow continued communications after the expiration of the previous allocation.

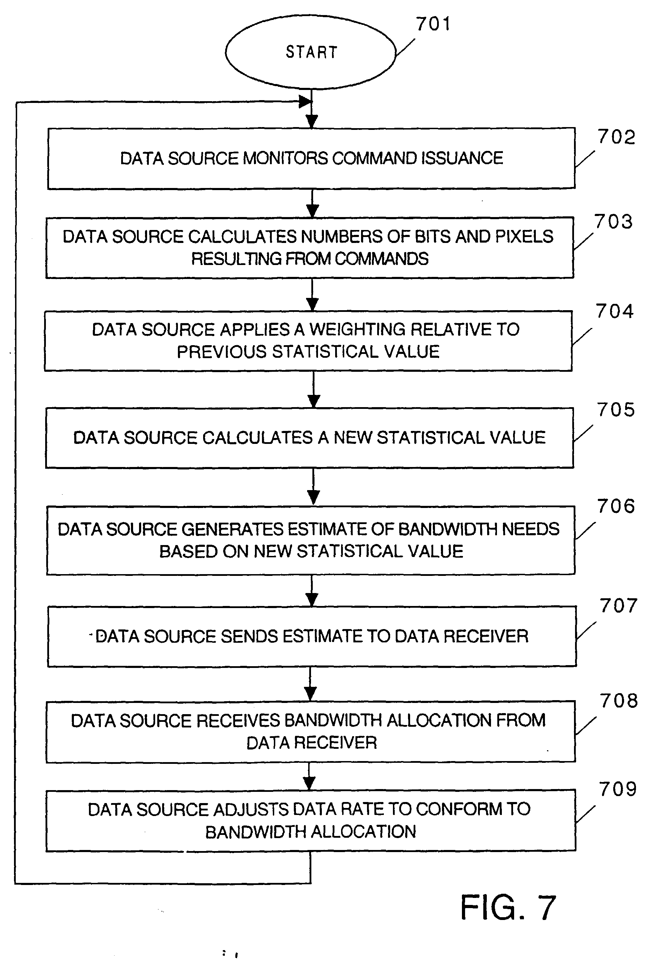

Figure 7 is a flow diagram illustrating a process for determining and adjusting bandwidth needs according to one embodiment of the invention. The process begins in step 701. In step 702, the data source monitors command issuance. In step 703, the data source calculates numbers of bits and/or pixels that can be expected to result from the execution of the monitored commands. In step 704, the data source applies a weighting relative to a previous statistical value. For example, if $a_i$ is a statistical value such as an average plus one standard deviation, the data source applies a weighting x when calculating a new average plus one standard deviation such that $a_{i+1} = (x) a_i + (1-x) S_{i+1}$. Thus, $a_{i+1} = a_i + (S_{i+1}-a_i)(1/(1-x))$. By selecting the appropriate weighting x, the importance of the new value $S_{i+1}$ relative to the previous statistical value $a_i$ can be controlled. In step 705, the data source calculates a new statistical value. In step 706, the data source generates an estimate of bandwidth needs based on the new statistical value. In step 707, the data source sends an estimate to the data receiver. In step 708, the data source receives a bandwidth allocation from the data receiver. In step 709, the data source adjusts its data rate to conform to the bandwidth allocation received from the data receiver.

The weighting as described in Figure 7 may be utilized in allocating bandwidth according to the procedure illustrated in Figure 6. For example, each data source's request (r) may be replaced with a value (r') equal to the data source's request (r) divided by the data source's weight. The requests may then be sorted at step 600 from lowest to highest based on r'. A value S may be calculated as the sum of all weights for the data sources and the remaining weight may be set equal to S. Steps 602 and 604 may be performed as illustrated above. Starting with the request with the lowest r' value (and progressing towards the highest r' value), a fair bandwidth value may be calculated for each request at step 606. For example, the fair bandwidth value may be equal to the requested weight divided by the total remaining weight (S) multiplied by the total remaining bandwidth:

$$(request\_weight)/(remaining\_weight) * (remaining\_bandwidth)$$

At step 608, if the current request is less than the fair bandwidth value, the service request may be allocated the full amount of the request at step 610. The allocated bandwidth is subtracted from the unallocated bandwidth at step 612. Additionally, the requested weight is subtracted from the remaining weight. However, similar to the procedure without weighting, if the current service's request is greater than or equal to the fair bandwidth value, the current request and all remaining requests are allocated the fair bandwidth value at step 616. Using these calculations and values, if all weights are set equal to one, the allocations are similar to the unweighted version. For example, if all weights are equal to one, requests are sorted by bandwidth and the fair bandwidth value is one over the remaining number of services times the remaining bandwidth.

One skilled in the art can see how the bandwidth allocation method can be applied to the allocation of other limited shared resources. One such resource that may be allocated in such a manner is the processing time of a CPU. This can be allocated in terms of cycles per second or percentage of CPU power. The procedures in Figure 6 and Figure 7 would be used by replacing bandwidth with processing power measurement and request.

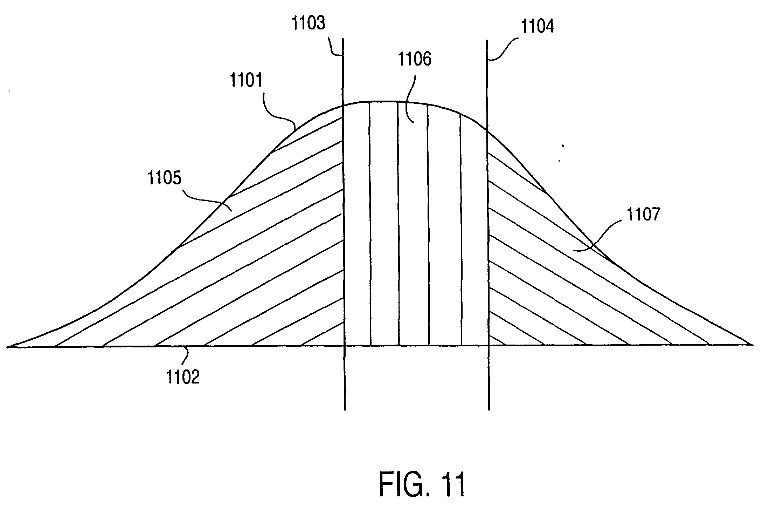

Figure 11 is a drawing of a normal distribution curve illustrating a graphical representation of a statistical value approximating a mean plus one standard deviation. Normal distribution curve 1101 is illustrated over baseline 1102. Vertical line 1103 represents the mean value of the numerical information represented by normal distribution curve 1101. Vertical line 1104 represents a value equal to the mean plus one standard deviation.

The area between normal distribution curve 1101 and baseline 1102 is divided into three regions. These three regions are region 1105 representing numerical information having values less than the mean value 1103, region 1106 representing numerical information having values between mean value 1103 and mean plus one standard deviation 1104, and region 1107 representing numerical information having values greater than mean plus one standard deviation 1104.

If bandwidth needs were estimated based on mean value 1103, there would be a roughly equal chance that the actual bandwidth needs would fall below the estimate (in region 1105) or above the estimate (in either of regions 1106 or 1107). Thus, it would be substantially likely that the estimate would be an underestimate of actual bandwidth needs.

However, by using the mean plus one standard deviation 1104 as a basis for estimation of bandwidth needs, it will be very likely that the actual bandwidth needs will fall below the estimate (in region 1105 or 1106) rather than above the estimate (in region 1107). Thus, the bandwidth requested according to such an estimate will usually be adequate to handle the actual bandwidth needs of the data source. While events in region 1107 will still exceed the estimate, an estimate farther to the right along normal distribution curve 1101 would substantially increase the requested bandwidth while providing benefit only rarely. Thus, the mean plus one standard deviation 1104 provides a useful statistical value for efficiently estimating bandwidth needs.

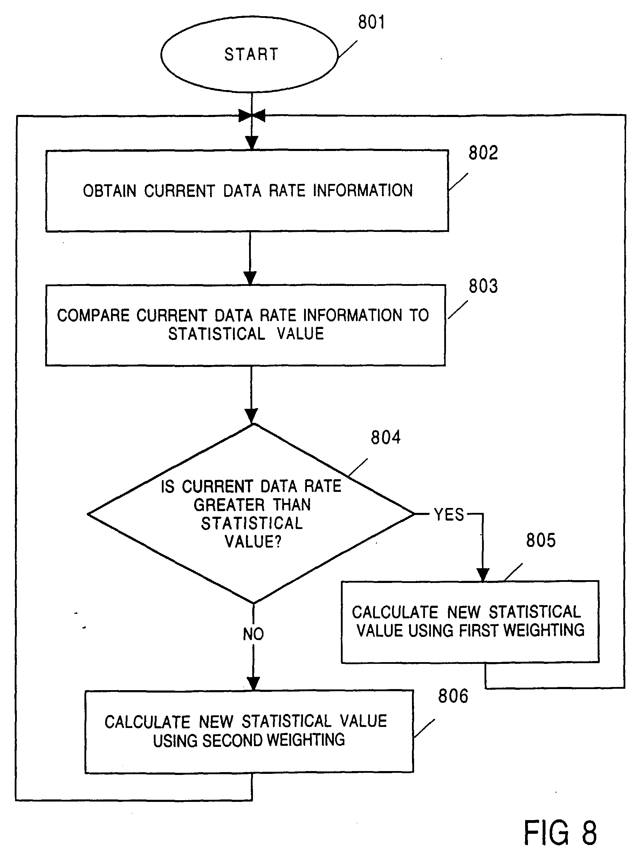

Figure 8 is a flow diagram illustrating a process for asymmetric tracking of data rate information. The process begins in step 801. In step 802, the current data rate information is obtained. In step 803, the current data rate information is compared to the statistical value. In step 804, a decision is made as to whether or not the current data rate is greater than the statistical value. If so, the process continues in step 805.

In step 805, a new statistical value is calculated using a first weighting. For example, a new statistical value can be generated according to the following equation: $a_{i+1} = x_1 a_i + (1-x_1)S_{i+1}$, where the first weighting is $x_1$. From step 805, the process returns to step 802. If, in step 804, the decision is made that the current data rate is not greater than the statistical value, the process continues in step 806. In step 806, a new statistical value is calculated using a second weighting. For example, a new statistical value can be generated according to the following equation: $a_{i+1} = x_2 a_i + (1-x_2)S_{i+1}$, where the second weighting is $x_2$. From step 806, the process returns to step 802.

By selecting appropriate values for $x_1$ and $x_2$ in the above equations, a statistical value, such as an approximation of a mean plus one standard deviation, may be calculated. Furthermore, by selecting $x_1 < x_2$, the new statistical value $a_{i+1}$ will be affected more by a new value $S_{i+1}$ greater than the previous statistical value $a_i$ than by a new value $S_{i+1}$ less than the previous statistical value $a_i$. Thus, the process will exhibit a "fast up, slow down" characteristic in which the statistical value will be influenced more by peaks in the S values than by lulls in the S values.

When applied to the estimation of bandwidth needs, such behavior will tend to prevent data sources that may transmit intermittent bursts of data with lengthy lulls between the bursts from underestimating their future bandwidth needs because of the influence of the lengthy bursts of data in the estimation process. Rather, the bandwidth needed by the data bursts will tend to dominate the estimation calculations.

Congestion Avoidance

Efficient bandwidth management allocates exactly the amount of available bandwidth. If less than the available amount of bandwidth is allocated, the unallocated bandwidth will be wasted. However, if more than the available amount of bandwidth is allocated, not all data that is attempted to be transmitted will actually be transmitted; some of the data will be lost.

Another impediment to efficient bandwidth management is that occasional bursts of data may occur in excess of the typical data rates. Moreover, with multiple data sources, the timing of such occasional bursts of data may be independent among the multiple data sources, allowing for the possibility that more than one data source may transmit such a burst roughly simultaneously, thereby generating very high instantaneous traffic on the communication medium. If the data rate of such traffic exceeds the bandwidth of the communication medium, data will be lost.

Thus, a technique is provided for avoiding congestion of the communication medium. This technique benefits from high reliability of modern communication media within their available bandwidths. For example, the incidence of data packet loss resulting from electrical interference is typically on the order of $10^{-12}$. Thus, the technique utilizes a reasonable assumption that all lost data packets over a communication medium result from congestion of the communication medium.

As discussed above, a data receiver according to one embodiment of the invention allocates the bandwidth of the communication medium over which it receives data to assure adequate bandwidth such that it can receive all data that a set of multiple data sources can transmit. Nevertheless, the possibility exists that network switches incorporated in the communication medium may drop packets if their internal buffers overflow from excessive traffic. Furthermore, although a data receiver has allocated resources to provide the designated amount of aggregate bandwidth over a period, bursts of data from multiple data sources may arrive essentially simultaneously, thereby overloading the data receiver's buffers and resulting in lost data packets. Additionally, congestion may result when a data source does not immediately recognize that its bandwidth allocation was cut before it sent a large number of commands or a large amount of data.

In any event, a data source can rely on the reasonable assumption that data losses are caused by congestion. If the data source responds to the detection of data losses by blindly sending error corrections at that point at the full data rate allocated to it, the congestion will likely be exacerbated.

Thus, one embodiment of the invention provides a congestion avoidance technique. According to one embodiment of this technique, a data source voluntarily limits its bandwidth use to an amount less than that allocated to it until the congestion situation improves. One example of a data source to which the present invention may be applied is a remote display device.

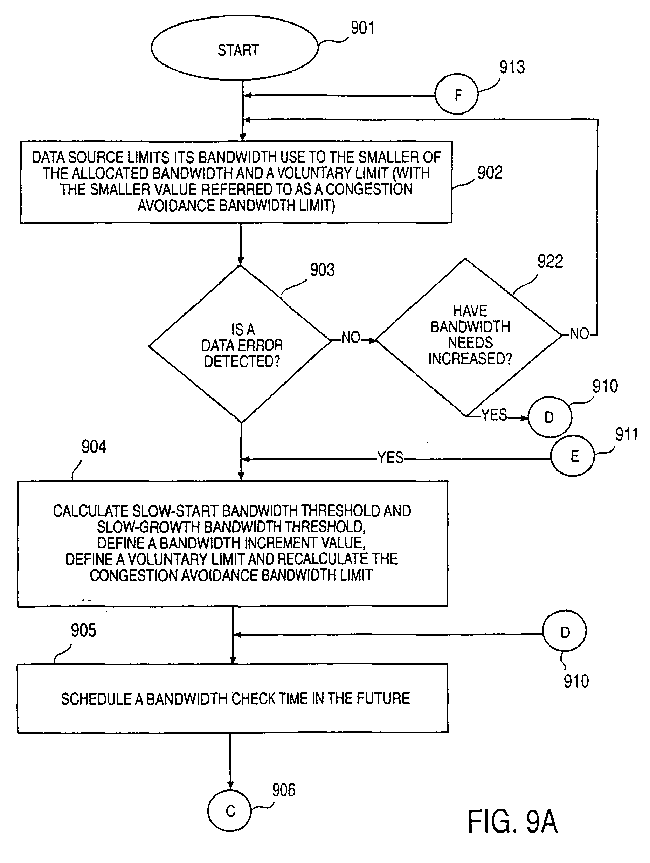

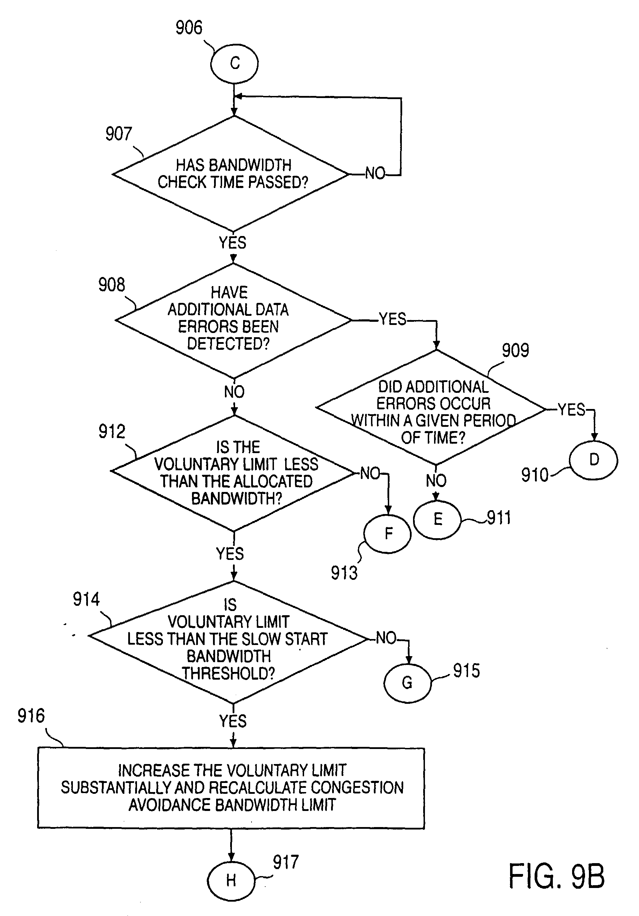

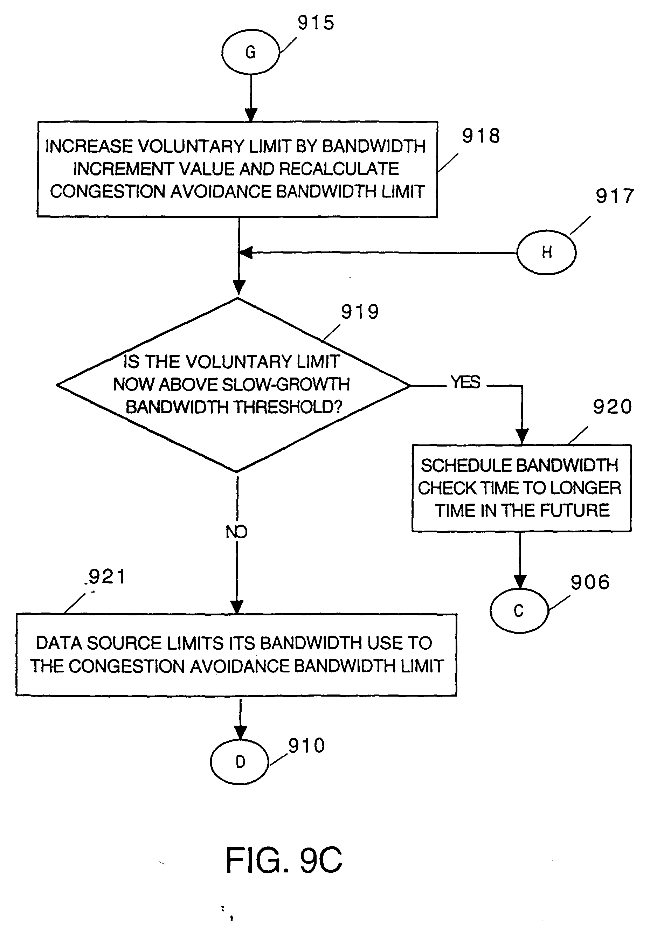

Figures 9A, 9B, and 9C are a flow diagram illustrating a process for congestion avoidance according to one embodiment of the invention. The process begins in step 901 and continues to step 902. In step 902, a data source limits the amount of bandwidth it is actually using to the smaller of the amount of bandwidth that has been allocated to it and a voluntary limit established by the data source itself. The smaller of the amount of allocated bandwidth and the voluntary limit is referred to as the congestion avoidance bandwidth limit.

In step 903, a decision is made as to whether or not a data error has been detected since the last time the process was at step 903. If not, the process continues to step 922. In step 922, a decision is made as to whether or not the bandwidth needs have increased. If so, the process continues to step 905 via reference 910. If not, the process returns to step 902. However, if in step 903 a data error has been detected, the process continues to step 904, where a slow-start bandwidth threshold and a slow-growth bandwidth threshold are calculated, a bandwidth increment value and a voluntary limit are defined, and the congestion avoidance bandwidth limit is recalculated. For example, the slow-start bandwidth threshold may be set to be some fraction of the current congestion avoidance bandwidth limit. As an example, this fraction may be in the range of 0.1 to 0.8, such as 0.5 of the current congestion avoidance bandwidth limit.

The slow-growth bandwidth threshold may, for example, be set to some fraction of the current congestion avoidance bandwidth limit. As an example, this fraction may be in the range of 0.2 to 0.9, such as 0.75 of the current congestion avoidance bandwidth limit. The bandwidth increment value may be set to some fraction of the current congestion avoidance bandwidth limit. As an example, this fraction may be in the range of 0.005 to 0.3, such as 0.03125 of the current congestion avoidance bandwidth limit. The voluntary limit may be set to some fraction of the current congestion avoidance bandwidth limit. As an example, this fraction may be in the range of 0.005 to 0.9, such as 0.0625 of the current congestion avoidance bandwidth limit.

In step 905, a bandwidth check time is scheduled in the future. For example, the bandwidth check time may be scheduled for a period from 5 to 500 mS, such as 50 mS, in the future. From step 905, the process continues to step 907 via reference 906. In step 907, a decision is made as to whether or not the bandwidth check time has passed. If not, the process returns to step 907. If, however, the bandwidth check time has passed, the process continues to step 908.

In step 908, a decision is made as to whether or not additional data errors have been detected. If additional data errors have been detected, the process continues to step 909. In step 909, a decision is made as to whether or not additional errors occurred within a given period of time. For example, this given period of time may be a period of time between 50 mS and 5 seconds, such as 500 mS. If additional errors occurred within the given period of time, the process returns to step 905 via reference 910. If not, the process returns to step 904 via reference 911. If, in step 908, no additional errors have been detected, the process continues to step 912.

In step 912, a decision is made as to whether or not the voluntary limit is less than the allocated bandwidth. If not, the process returns to step 902 via reference 913. If, however, the voluntary limit is less than the allocated bandwidth, the process continues to step 914. In step 914, a decision is made as to whether or not the voluntary limit is less than the slow-start bandwidth threshold. If not, the process continues to step 918 via reference 915.

In step 918, the value of the voluntary limit is increased by the amount of the bandwidth increment value. From step 918, the process continues to step 919.

If in step 914, the voluntary limit is less than the slow-start bandwidth threshold, the process continues to step 916. In step 916, the voluntary limit is substantially increased. For example, the voluntary limit may be increased by multiplying it by a given factor. For example, if a given factor such as two is used, the voluntary limit is doubled in step 916. Other factors, for example, factors in the range of one to ten may be used. From step 916, the process continues to step 919 via reference 917.

In step 919, a decision is made as to whether or not the voluntary limit is now above the slow-growth bandwidth threshold. If so, a bandwidth check time is scheduled for a time in the future. This time in the future is farther into the future than the time into the future at which the bandwidth check time is scheduled in step 905. For example, the time into the future at which the bandwidth check time is scheduled in step 919 may be in the range of 100 mS to 10 seconds, such as one second into the future. From step 920, the process continues to step 907 via reference 906.

If, in step 919, the voluntary limit is not above the slow-growth bandwidth threshold, the process continues in step 921. In step 921, the data source limits the amount of bandwidth it is actually using to the congestion avoidance bandwidth limit. From step 921, the process returns to step 905 via reference 910.

The congestion avoidance technique according to one embodiment of the invention adheres to a principle that, if errors are caused by congestion, it is important for the data source to remain relatively quiet for some time to allow the congestion to be reduced. However, this principle is balanced against the principle that it is important for the data source to return to a typical rate of data transmission relatively quickly to avoid the perception of a long pause in the data provided by the data source. By quickly reducing the data rate to a low level, then doubling or otherwise quickly increasing the data rate until the data rate has been restored to some fraction, such as half, of its former value, these principles are effectively balanced, and the desired result is achieved. The data rate being used by the data source at the time the first error was detected may be used as this former value.

Once the data rate has been restored to a substantial fraction, such as half, of its former value, the data rate is increased relatively slowly to a higher fraction of its former value, such as 0.75. Once the data rate has reached this higher fraction of its former value, the data rate is increased even more slowly. This process effectively allows a "probing" effect to determine if the high level of the former data rate contributed to the data error that was detected. If, as the data rate is increased toward its former level, additional error are detected, the data rate is again reduced and gradually increased to reduce additional congestion. Otherwise, if no further data errors are experienced, the process increases the amount of bandwidth used by the data source to the full amount of bandwidth allocated to the data source.

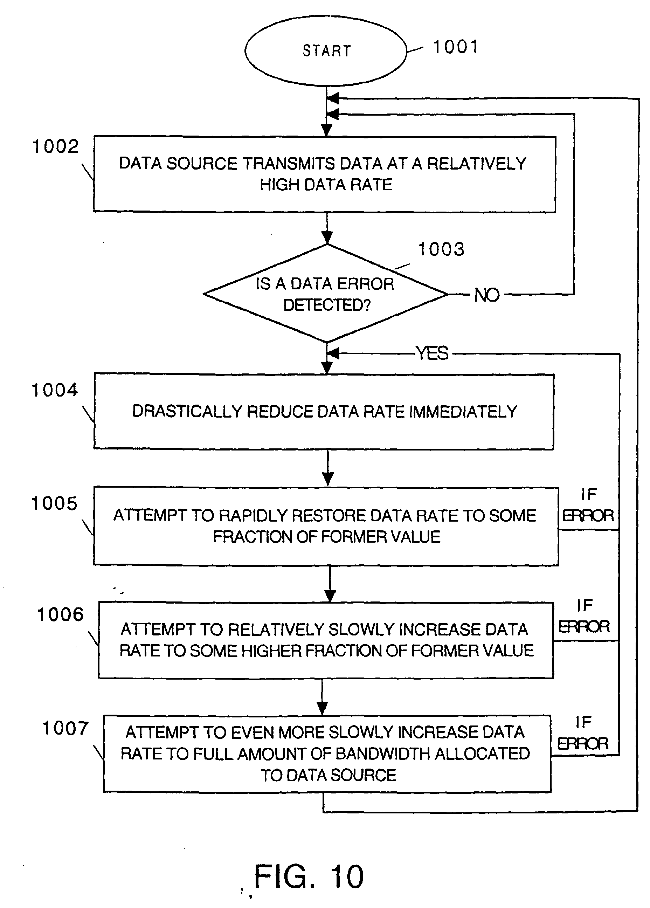

Figure 10 illustrates an example of the congestion avoidance technique according to one embodiment of the invention. The process begins in step 1001 and continues in step 1002. In step 1002, a data source transmits data at a relatively high data rate. In step 1003, a decision is made as to whether or not a data error is detected. If no data error is detected, the process returns to step 1002. If, however, a data error is detected, the process continues to step 1004. In step 1004, the data source drastically reduces its data rate immediately.

In step 1005, the data source attempts to rapidly restore its data rate to some fraction, for example half, of its former value. If a data error is detected, the process returns to step 1004. Otherwise, the process continues to step 1006. In step 1006, the data source attempts to relatively slowly increase its data rate to some higher fraction of its former value, for example, 0.75. If a data error is detected, the process returns to step 1004. Otherwise, the process continues to step 1007.

In step 1007, the data source attempts to even more slowly increase its data rate to the full amount of bandwidth allocated to the data source. From step 1007, the process returns to step 1002.

Thus, a method and apparatus for management of communications over media of finite bandwidth has been described in conjunction with one or more specific embodiments. The invention is defined by the claims and their full scope of equivalents.

The features disclosed in the foregoing description, in the claims and/or in the accompanying drawings may, both separately and in any combination thereof, be material for realising the invention in diverse forms thereof.

**Claims**

1. A method comprising the steps of:

   receiving estimates of bandwidth needs from a plurality of data sources;
   sorting said estimates of bandwidth needs;
   traversing said sorted estimates of bandwidth needs and performing the following for at least one of said estimates:

   obtaining a fair bandwidth value;
   determining if said estimate of bandwidth need is less than said fair bandwidth value; and
   allocating a full amount of said estimate of bandwidth need if said need is less than said fair bandwidth value.

2. The method of claim 1 further comprising allocating said fair bandwidth value to all remaining estimates if said need is greater than or equal to said fair bandwidth value.

3. The method of claim 1 wherein said fair bandwidth value is the amount of unallocated bandwidth divided by a number of remaining estimates.

4. The method of claim 1 wherein said estimates of bandwidth needs are sorted from lowest to highest bandwidth.

5. The method of claim 1 wherein each estimate of bandwidth need is sorted by said estimate divided by a data source's weight.

6. The method of claim 5 wherein said fair bandwidth value is equal to said data source's weight divided by a remaining weight multiplied by remaining bandwidth.

7. A system comprising:

   one or more data sources configured to transmit estimates of bandwidth needs;
   a data receiver configured to:

   sort said estimates of bandwidth needs;
   for at least one of said estimates of bandwidth needs,

   obtain a fair bandwidth value;
   determine if said estimate of bandwidth need is less than said fair bandwidth value; and
   allocate a full amount of said estimate of bandwidth need if said need is less than said fair bandwidth value.

8. The system of claim 7 wherein said data receiver is further configured to allocate said fair bandwidth value to all remaining estimates if said need is greater than or equal to said fair bandwidth value.

9. The system of claim 7 wherein said fair bandwidth value is the amount of unallocated bandwidth divided by a number of remaining estimates.

10. The system of claim 7 wherein said estimates are sorted from lowest to highest bandwidth.

11. The system of claim 7 wherein each estimate of bandwidth need is sorted by said estimate divided by a data source's weight.

12. The system of claim 11 wherein said fair bandwidth value is equal to said data source's weight divided by a remaining weight multiplied by remaining bandwidth.

13. A computer program product comprising:

   a computer usable medium having computer readable program code embodied therein configured to allocate bandwidth, said computer program product comprising:
   computer readable program code configured to cause a computer to obtain estimates of bandwidth needs from a plurality of data sources;
   computer readable program code configured to cause a computer to sort said estimates of bandwidth needs;
   computer readable program code configured to cause a computer to obtain a fair bandwidth value for at least one estimate of bandwidth need;
   computer readable program code configured to cause a computer to determine if said estimate of bandwidth need is less than said fair bandwidth value; and
   computer readable program code configured to cause a computer to allocate a full amount of said estimate of bandwidth need if said need is less than said fair bandwidth value.

14. The computer program product of claim 13 further comprising computer readable program code configured to cause a computer to allocate said fair bandwidth value to all remaining estimates if said need is greater than or equal to said fair bandwidth value.

**15.** The computer program product of claim 13 wherein said fair bandwidth value is an amount of unallocated bandwidth divided by a number of remaining estimates.

**16.** The computer program product of claim 13 wherein said computer readable program code configured to cause a computer to sort said estimates sorts said estimates from lowest to highest bandwidth.

**17.** The computer program product of claim 13 wherein each estimate of bandwidth need is sorted by said estimate divided by a data source's weight.

**18.** The computer program product of claim 17 wherein said fair bandwidth value is equal to said data source's weight divided by a remaining weight multiplied by remaining bandwidth.

FIG. 1

| | |
|---|---|
| DATABASE | 206 |
| SERVER | 205 |
| CLIENT OR GUI | 204 |
| COMMUNICATION INTERFACE | 203 |

COMMUNICATION MEDIUM 102

| |
|---|
| COMMUNICATION INTERFACE 202 |
| HUMAN INTERFACE 201 |

FIG. 2

FIG 3

START — 401

DATA SOURCE MONITORS COMMAND ISSUANCE — 402

DATA SOURCE ESTIMATES BANDWIDTH NEEDS IN BOTH BITS PER SECOND AND PIXELS PER SECOND — 403

DATA SOURCE TRANSMITS ESTIMATES OF BANDWIDTH NEEDS TO DATA RECEIVER — 404

DATA SOURCE RECEIVES BANDWITH ALLOCATION FROM DATA RECEIVER — 405

DATA SOURCE LIMITS TRANSMITTED DATA RATE TO CONFORM TO BANDWITH ALLOCATION — 406

# FIG 4

FIG. 5

A — 505

SORT DATA REQUESTS BY AMOUNT OF BANDWIDTH REQUESTED — 600

SET UNALLOCATED BANDWIDTH TO THE AVAILABLE BANDWIDTH — 602

SET REMAINING REQUESTS TO TOTAL NUMBER OF REQUESTS — 604

CALCULATE A FAIR BANDWIDTH VALUE — 606

CURRENT REQUEST LESS THAN FAIR BANDWIDTH VALUE? — 608

NO → ALLOCATE FAIR BANDWIDTH VALUE TO ALL REMAINING DATA REQUESTS — 616

B — 507

YES

ALLOCATE FULL AMOUNT OF BANDWIDTH REQUEST — 610

SUBTRACT ALLOCATED AMOUNT FROM AMOUNT OF UNALLOCATED BANDWIDTH — 612

SUBTRACT 1 FROM THE REMAINING REQUESTS — 614

FIG. 6

701

START

702

DATA SOURCE MONITORS COMMAND ISSUANCE

703

DATA SOURCE CALCULATES NUMBERS OF BITS AND PIXELS RESULTING FROM COMMANDS

704

DATA SOURCE APPLIES A WEIGHTING RELATIVE TO PREVIOUS STATISTICAL VALUE

705

DATA SOURCE CALCULATES A NEW STATISTICAL VALUE

706

DATA SOURCE GENERATES ESTIMATE OF BANDWIDTH NEEDS BASED ON NEW STATISTICAL VALUE

707

·DATA SOURCE SENDS ESTIMATE TO DATA RECEIVER

708

DATA SOURCE RECEIVES BANDWIDTH ALLOCATION FROM DATA RECEIVER

709

DATA SOURCE ADJUSTS DATA RATE TO CONFORM TO BANDWIDTH ALLOCATION

FIG. 7

801

START

802

OBTAIN CURRENT DATA RATE INFORMATION

803

COMPARE CURRENT DATA RATE INFORMATION TO
STATISTICAL VALUE

804

IS CURRENT DATA RATE
GREATER THAN
STATISTICAL
VALUE?

YES

805

CALCULATE NEW STATISTICAL
VALUE USING FIRST WEIGHTING

NO

806

CALCULATE NEW STATISTICAL VALUE
USING SECOND WEIGHTING

FIG 8

START — 901

913 — F

DATA SOURCE LIMITS ITS BANDWIDTH USE TO THE SMALLER OF THE ALLOCATED BANDWIDTH AND A VOLUNTARY LIMIT (WITH THE SMALLER VALUE REFERRED TO AS A CONGESTION AVOIDANCE BANDWIDTH LIMIT) — 902

IS A DATA ERROR DETECTED? — 903

—NO→ HAVE BANDWIDTH NEEDS INCREASED? — 922 —NO→

—YES— D — 910

—YES— E — 911

CALCULATE SLOW-START BANDWIDTH THRESHOLD AND SLOW-GROWTH BANDWIDTH THRESHOLD, DEFINE A BANDWIDTH INCREMENT VALUE, DEFINE A VOLUNTARY LIMIT AND RECALCULATE THE CONGESTION AVOIDANCE BANDWIDTH LIMIT — 904

905 — SCHEDULE A BANDWIDTH CHECK TIME IN THE FUTURE

D — 910

C — 906

FIG. 9A

906

C

907

HAS BANDWIDTH
CHECK TIME PASSED? —NO

YES

908

HAVE
ADDITIONAL DATA
ERRORS BEEN
DETECTED? —YES

909

DID ADDITIONAL
ERRORS OCCUR
WITHIN A GIVEN PERIOD
OF TIME? —YES

NO

910   D

912

IS THE
VOLUNTARY LIMIT LESS
THAN THE ALLOCATED
BANDWIDTH? —NO

NO

E   911

YES

F

913

914

IS
VOLUNTARY LIMIT
LESS THAN THE SLOW START
BANDWIDTH
THRESHOLD? —NO

G   915

YES

916

INCREASE THE VOLUNTARY LIMIT
SUBSTANTIALLY AND RECALCULATE CONGESTION
AVOIDANCE BANDWIDTH LIMIT

H   917

FIG. 9B

FIG. 9C

FIG. 10

27

FIG. 11

FIG. 12

KEYBOARD 1210

MOUSE 1211

MASS STORAGE 1212

1218

PROCESSOR 1213

VIDEO MEMORY 1214

MAIN MEMORY 1215

COMM INT 1220

I/O 1219

VIDEO AMP 1216

CRT 1217

1200

NETWORK LINK 1221

LOCAL NETWORK 1222

HOST 1223

ISP 1224

INTERNET 1225

SERVER 1226

FIG. 13

FIG. 14